# EUROPEAN PATENT SPECIFICATION

(11) **EP 0 520 506 B1**
(45) Date of publication and mention of the grant of the patent: **25.01.1995**
(21) Application number: 92110861.9
(22) Date of filing: 26.06.1992
(51) Int. Cl.: C08F 283/02

(54) **Process for producing grafted polycarbonate resin**
Verfahren zur Herstellung von Pfropfpolycarbonatharz
Procédé de production de résine polycarbonate greffé

(30) Priority: 27.06.1991 JP 182933/91
(43) Date of publication of application: 30.12.1992
(73) Proprietor: MITSUBISHI GAS CHEMICAL COMPANY, INC., Tokyo, 100 (JP)
(72) Inventor: Umemura, Toshikazu, Mitsubishi Gas Chem.Comp.Inc., Toyonaka-shi, Osaka (JP)
(74) Representative: Hansen, Bernd, Dr. Dipl.-Chem.

(56) References cited:
- DE-A- 1 720 645
- US-A- 3 692 870
- CHEMICAL ABSTRACTS, vol. 92, no. 6, 1980, Columbus, Ohio, US; abstract no. 42814Y, KAKIZAKI ET AL: 'Improved blending of polycarbonate with polystyrene' page 31 ;column 2 ; & JP-A-54117555 (Mitsubishi Petrochemical Co.)12.09.79.
- Derwent Abstract AN-88-268288 (& JP-A-63196612 cited in the description).

## Description

### BACKGROUND OF THE INVENTION

### 1) Field of the Invention

This invention relates to a process for producing a polycarbonate resin having good transparency and flowability, obtained by graft polymerization of an aromatic polycarbonate resin having one unsaturated terminal group by a vinyl monomer, and provides a useful resin composition for optical uses such as optical discs and optical lenses, or as an agent for making components of a polymer blend compatible, an adhesive, or a paint.

### 2) Prior Art

So far known materials for optically transparent molded products include acrylic resin because of its distinguished characteristics such as good transparency and flowability and small birefrangence [Japanese Patent Application Kokai (Laid-open) No. 56-131654]. However, acrylic resin has a low heat resistance such as about 70°C, a low impact resistance and a liability to warp due to moisture as disadvantages. To overcome these disadvantages it was proposed to use polycarbonate resin having a viscometric average molecular weight of 15,000 to 18,000 as molding materials for optical discs or lenses [Japanese Patent Application Kokai (Laid-open) No. 58-180553], but the proposed polycarbonate is not satisfactory in the flowability and still has a limit to its application.

To improve the flowability of polycarbonate resin, it was proposed to melt blend the polycarbonate resin with such a vinylic resin as polystyrene, polymethylmethacrylate, acrylonitril-styrene copolymer (AS resin), maleic anhydride-styrene copolymer, etc., but it was difficult to make the sizes of dispersed particles less than 1 »m due to the non-compatibility, resulting in optical unevenness. It was also proposed to use a vinylic monomer as a solvent for the polycarbonate resin and conduct bulk polymerization [Japanese Patent Application Kokai (Laid-open) No. 63-196612], where dispersed particles having sizes of less than 0.2 »m could be obtained, but a larger amount of the solvent must be used, resulting in a costly disadvantage.

### SUMMARY OF THE INVENTION

It is an object of the present invention to provide a process for producing a commercially producible, grafted polycarbonate resin.

That is, the present invention relates to a process for producing a grafted polycarbonate resin, which comprises
adding to an aqueous suspension of an aromatic polycarbonate resin in the shape of a powder or a pellet having particle sizes of 0.1 to 5 mm and
having radical-polymerizable unsaturated terminal group, 5 to 200 parts by weight of a vinyl monomer on the basis of 100 parts by weight of the polycarbonate resin and 0.01 to 5 parts by weight of a radical polymerization initiator on the basis of 100 parts by weight of the vinyl monomer,
heating the aqueous suspension under such a condition that no substantial decomposition of the radical polymerization initiator takes place, at a temperature lower by at least 5°C than the decomposition temperature for the half-value period of 10 hours of the radical polymerization initiator, thereby impregnating the polycarbonate resin with the vinyl monomer and the radical polymerization initiator,
then elevating the temperature at which decomposition of the radical polymerization initiator starts, thereby conducting graft-polymerization reaction between the polycarbonate and vinyl monomer.

Further, the grafted polymer may be melt-kneaded at the temperature of 200°C to 350°C for completing the grafting.

### BRIEF DESCRIPTION OF THE DRAWINGS

Figs. 1 to 3 each show a state of a dissolution of a polycarbonate resin and polystyrene.

Figs. 1 and 2 are transmission electron microscopys of an ultra thin film of the test piece (x 10,000) which show a state of dissolution of polycarbonate and polystyrene in the grafted polycarbonate resin of this invention.

Fig. 3 is a transmission electron microscopy of an ultra thin film of the test piece (x 10,000) which shows a state of dissolution of polycarbonate resin and polystyrene of a kneaded composition by melt/mixing. (Comparative Example).

### DETAILED DESCRIPTION OF THE INVENTION

The present invention will be explained in detail below.

An aromatic polycarbonate resin having radical-polymerizable-unsaturated terminal group on molecule in the present invention can be prepared by aqueous emulsion polymerization using a monofunctional compound having an unsaturated double bond as a compound for introducing the radical polymeriable unsaturated terminal group or a terminating agent or together with a conventional terminating agent in the same procedure for preparing the conventional aromatic polycarbonate resin as solution procedures, for example, interfacial polymerization procedure, a pyridine procedure and a chloroformate procedure. The aromatic polycarbonate resin thus prepared has a viscometric average molecular weight of 2,000 to 100,000, preferably 5,000 to 50,000, particularly preferably 6,000 to 30,000. The thus prepared polycarbonate resin can be solidified and recovered from the polycarbonate resin solution after the reaction according to various procedures, for example, a procedure for adding a poor solvent to the polycarbonate resin solution, thereby precipitating the polycarbonate resin, a procedure for distilling off the solvent from the polycarbonate resin solution, thereby concentrating the solution into powdery polycarbonate resin, and a procedure for adding a poor solvent to the polycarbonate resin solution, pouring the resulting mixture into hot water with heating, thereby suspending the polycarbonate resin in the hot water, distilling off the solvent and the poor solvent, thereby solidifying the polycarbonate resin to form an aqueous slurry, and recycling to a wet mill the aqueous slurry in the solidification process and grinding it. In the present invention, it is rational and preferable to use an aqueous slurry of polycarbonate resin as an aqueous suspension of polycarbonate resin.

Preferable dihydric phenol compounds for use in the preparation of the present polycarbonate resin include, for example, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3,5-dimethylphenyl)propane, 1,1-bis(4-hydroxyphenyl)-1-phenylethane, and bis(4-hydroxyphenyl)diphenylmethane.

The monofunctional compound having an unsaturated terminal double bond for introducing an unsaturated terminal group includes, for example, phenols containing an unsaturated group such as eugenol, iso-eugenol, p-hydroxy methyl cinnamate, isopropenylphenol, hydroxystyrene, hydroxyphenylmaleimide; hydroxy substituted methacrylate such as 2-hydroxy ethylmethacrylate, 2-hydroxy propylmethacrylate; unsaturated carboxylic acids such as acrylic acid, methacrylic acid, vinylacetic acid, 2-pentenoic acid, 3-pentenoic acid, 5-hexenoic acid, 9-decenoic acid, and 9-undecenoic acid; acid chlorides or chloroformates such as acrylic chloride, methacrylic chloride, sorbic chloride, allyl alcohol chloroformate, isopropenylphenol chloroformate and hydroxystyrene chloroformate; benzoic acid containing an unsaturated group such as acryroxy benzoic acid, methacryroxy benzoic acid. Among these compounds, the phenols containing unsaturated group are preferred, and these compounds may be used together with the conventional terminating agent and are usually used in a range of 1 to 25% by mole, preferable 1.5 to 10% by mole, on the basis of one mole of the dihydric phenol compound.

As the conventional terminating agent, phenols are, generally, used such as phenol, alkylphenol having alkyl group 1 to 18 carbon atoms, alkyl ester substituted phenol having alkyl group 1 to 18 carbon atoms, halogenated phenol and cumylphenol.

In the process for producing the aromatic polycarbonate resin of this invention, the grafting ratio may be controlled by changing an amount of the introducing unsaturated terminal group, using the compound having an unsaturated double bond together with conventional terminating agent, considering the reactivity of unsaturated terminal group.

The amount of conventional terminating agent may be used in a range of 0 to 30 mole, preferably, 0 to 15 mole per mole of unsaturated compound for introducing radical-polymerizable unsaturated terminal group to aromatic polycarbonate resin.

The polycarbonate resin for use in the present invention is prepared from the above-mentioned components as essential ones, but 0.01 to 3% by mole, particularly 0.1 to 1.0% by mole, of a branching agent may be used together on the basis of the dihydric phenol compound to make a branched polycarbonate resin. The branching agent includes, for example, polyhydroxy compounds such as fluoroglycine, 2,6-dimethyl-2,4,6-tri(4-hydroxyphenyl)heptane-3, 4,6-dimethyl-2,4,6-tri(4-hydroxyphenyl)heptane-2, 1,3,5-tri(2-hydroxyphenyl)benzene, 1,1,1-tri(4-hydroxyphenyl)ethane, 2,6-bis(2-hydroxy-5-methylbenzyl)-4-methylphenol, and α,α',α''-tri(4-hydroxyphenyl)-1,3,5-triisopropylbenzene, and 3,3-bis(4-hydroxyallyl)oxyindol (=isatinbisphenol), 5-chloroisatin, 5,7-bromoisatin and 5-bromoisatin.

The aromatic polycarbonate resin in the present invention is in a shape of a powdery or pellet having particle sizes of 0.1 to 5 mm. When the particle size is excessively large, not only dispersion in a suspension becomes difficult, but also the time for impregnation with the vinyl monomer and radical initiator, etc. will be prolonged.

The vinyl monomer for use in the present invention is preferably stable in water and insoluble in water and has a lower affinity for water, and is, for example, at least one member selected from the group consisting of vinyl aromatic monomers, substituted maleimide, fumaric acid esters, maleic acid esters, acrylic acid ester monomers or methacrylic acid ester monomers, acrylonitrite or methacrylonitrile, glycidyl methacrylate and vinyl ester monomers. The vinyl aromatic monomers include, for example, styrene; alkyl-substituted styrenes such as o-methylstyrene, p-methylstyrene, α-methylstyrene, o-butylstyrene, p-butylstyrene and 2,4-dimethylstyrene; and halogenated styrenes such as chlorostyrene and bromostyrene. The acrylic acid ester monomers or methacrylic ester monomers include, for example, alkyl methacrylates such as methyl methacrylate, ethyl methacrylate, cyclohexyl methacrylate, alkylacrylate such as butyl acrylate, n-hexyl acrylate. The substituted maleimides include, for example, maleimide, N-methylmaleimide, N-ethylmaleimide, N-propylmaleimide. The fumaric acid esters include, for example, diethyl fumarate, dimethyl fumarate, diisopropyl fumarate. The maleic acid esters include, for example, dimethyl maleate, diethyl maleate, dipropyl maleate. The vinyl monomer is preferably styrene and substituted styrenes, and is used in a range of 5 to 200 parts by weight, preferably 50 to 150 parts by weight, on the basis of 100 parts by weight of the polycarbonate resin.

In the present invention, a molecular weight-controlling agent can be used for the vinyl monomer. Suitable molecular weight-controlling agent are organic sulfur compounds, which are, for example, aliphatic compounds having 1 to 30 carbon atoms or aromatic compounds, specifically aliphatic mercaptanes such as n-octylmercaptane and n-dodecylmercaptane, tert-dodecylmercaptane, hexadecylmercaptane, n-octadecylmercaptane; aromatic mercaptane, thioglycolic acid and its esters, ethylene thioglycolic acid and its esters and ethylene glycol. The molecular weight-controlling agent is used in a range of 0.0001 to 5 parts by weight, preferably 0.01 to 1 part by weight, on the basis of 100 parts by weight of the vinyl monomer.

The radical polymerization initiator for use in the present invention is the one having a decomposition temperature for a half-value period of 10 hours being 40 to 90°C, preferably 60 to 80°C. The decomposition temperature for a half-value period of 10 hours is a temperature at which 0.1 mole of a radical polymerization initiator added to 1 ℓ of benzene is decomposed to 50% just after 10 hours. The radical polymerization initiator includes, for example, diisopropyl peroxydicarbonate, di-n-propyl peroxydicarbonate, dimyristyl peroxycarbonate, di-(2-ethoxyethyl) peroxydicarbonate, di-(methoxyisopropyl) peroxydicarbonate, di-(2-ethylhexyl) peroxydicarbonate, t-hexyl peroxyneodecanoate, di-(3-methyl-3-methoxybutyl) peroxydicarbonate, t-butyl peroxyneodecanoate, t-hexyl peroxyneohexanoate, t-butyl peroxyhexanoate, 2,4-dichlorobenzoyl peroxide, t-hexyl peroxypivalate, t-butyl peroxypivalate, 3,5,5-trimethylhexanoyl peroxide, octanoyl peroxide, lanroyl peroxide, cumyl peroxyoctoate, acetyl peroxide, t-butyl peroxy-2-ethylhexanoate, m-tolnoyl peroxide, benzoyl peroxide, t-butyl peroxyisobutyrate, and 1,1-bis(t-butylperoxy)-3,5,5-trimethylcycohexane. The radical polymerization initiator is used in a range of 0.01 to 5 parts by weight, preferably 0.05 to 1 parts by weight, on the basis of 100 parts by weight of the vinyl monomer.

According to the present invention, the polycarbonate resin, the vinyl monomer and the radical polymerization initiator are suspended in an aqueous medium, and the resulting aqueous suspension is heated to a temperature, at which no substantial decomposition of the radical polymerization initiator takes place, thereby impregnating the polycarbonate resin with the vinyl monomer and the radical polymerization initiator, and then the temperature is elevated to conduct graft polymerization, thereby form a grafted polycarbonate. A suspending agent such as polyvinyl alcohol, polyvinyl-pyrrolidone, methyl cellulose, or other water-soluble polymers and calcium phosphate, magnesium oxide and other water-soluble inorganic substances can be added to the aqueous medium. Reactants such as the polycarbonate, etc. in the aqueous suspension can be at any desired concentration, but usually the reactants are in a range of 5 to 100 parts by weight on the basis of 100 parts by weight of water.

In the present invention, it is preferable to impregnate the polycarbonate resin with the vinyl monomer and the radical polymerization initiator at a temperature as high as possible, but it is necessary to do so at such a temperature that no substantial decomposition of the radical polymerization initiator takes place, because, if the radical polymerization initiator is decomposed during the impregnation, the grafted polycarbonate obtained will have an uneven polymer. The impregnation temperature is by at least 5°C lower than the decomposition temperature for a half-value period of 10 hours of the radical polymerization initiator.

Then, the temperature of the aqueous suspension is slowly elevated to a temperature, at which the decomposition of the radical polymerization initiator starts, thereby conducting graft polymerization to form a grafted polycarbonate. In the graft polymerization, such a temperature must be kept for such a time that at least 50% by weight of the radical polymerization initiator can be decomposed and at least 90% by weight of the vinyl monomer is converted. The remaining radical polymerization initiator usually amounts to less than 50% by weight of the initial charge. After the graft reaction, the grafted polymer is recovered from the aqueous suspension by liquid-solid separation and, if necessary, washed with water, hot water, or the like and dried.

Thus obtained grafted polycarbonate includes occasionally unreacted vinylmonomer so that the grafted polymer is melt-kneaded at a temperature of 200 to 350°C to complete grafting, whereby a grafted polycarbonate resin is obtained. The melt-kneading can be carried out at the above-mentioned temperature either batchwise or continuously, for example, by a bambury mixer, an extruder, an injection molding machine or the like. It is also possible to recover a portion of unreacted monomer by distillation under reduced pressure during the melt-kneading. A vinyl monomer which is unstable in water or has a high affinity for water, such as maleic anhydride, acrylic acid, methacrylic acid, or N-phenylmaleimide can be melt-kneaded with the grafted polycarbonate, where it is preferable to mix these components in advance and keep the mixture for a desired time to make aging and uniform dispersion. It is also possible to use ordinary polycarbonate resin or together with polystyrene, polymethylmethacrylate or AS resin thereto during the melt-kneading, using grafted polycarbonate resin composition as an agent for making the components compatible, thereby make a polymer alloy.

The grafted polycarbonate resin prepared according to the present invention can be used in various applications. For example, it is particularly suitable as optical polycarbonate molding materials when styrene is used as a vinyl monomer and useful as an agent for making components compatible and as a surface coating primer for polycarbonate resin when styrene, methacrylate or acrylate is used. By using the present grafted polycarbonate resin as an agent for making the resin components compatible, microfinely dispersed polymer alloys, such as those of polycarbonate resin-styrene-grafted polycarbonate resin composition-styrene/maleic anhydride copolymer, polycarbonate resin-acrylonitrile-grafted polycarbonate resin composition-polymethylmethacrylate, etc. can be obtained.

### DESCRIPTION OF THE PREFERRED EMBODIMENTS

### Example 1

3.4 kg of sodium hydroxide was dissolved in 4.2 ℓ of water, and further 6.6 kg of 2,2-bis(4-hydroxyphenyl)propane (=BPA) and 8 g of hydrosulfite were dissolved in the solution, while keeping the solution at 20°C. Then, 28 ℓ of methylene chloride was added thereto and 250 g of p-isopropenylphenol was added thereto with stirring. Then, 3.3 kg of phosgene was fed therein over 60 minutes.

After the feeding of phosgene, the reaction solution was vigorously stirred to emulsify it, and thereafter 8 g of triethylamine was added thereto and the emulsion was stirred for about one hour to conduct polymerization.

The resulting polymerization solution was separated into an aqueous phase and an organic phase, and the organic phase was neutralized with phosphoric acid and repeatedly washed with water until the pH of washing water became neutral. Then, 35 ℓ of isopropanol was added to precipitate the polymers. Then, the precipitates were recovered therefrom by filtration and vacuum dried, whereby white powdery polycarbonate resin was obtained.

As a result of measuring the viscosity of the polycarbonate resin, it was found that the viscometric average molecular weight (Mv) was 16,000.

500 g of powder of the terminally unsaturated polycarbonate resin were placed in a stainless steel autoclave having a net volume of 5 ℓ, and 2,500 ml of deionized water was added thereto. Then, 2.5 g of benzoyl peroxide (temperature for a half-value period of 10 hours: 74°C) as a radical polymerization initiator, 200 g of styrene monomer and 0.2 g of n-dodecylmercaptane as a molecular weight-controlling agent were added thereto. Then, the mixture was stirred for 2 hours, while keeping the temperature of the autoclave at 60° - 65°C to impregnate the powder of the terminally unsaturated polycarbonate with the radical polymerization initiator, styrene and n-dodecylmercaptane. Then, the temperature of the autoclave was elevated to 80°C and stirring was continued for 7 hours. At that time, 78% of the radical polymerization initiator was decomposed and 60% of styrene monomer was converted.

Polymer powder was recovered from the suspension, washed with hot water and made thoroughly free from the washing water. The resulting polymer powder had a water content of 8% by weight. The wet polymer powder was fed to a vent-type, biaxial extruder, 30 mm in shaft diameter with L/D = 32, and extruded at a resin temperature of 280°C to obtain pellets.

The pellets thus obtained were transparent and substantially did not contain styrene monomer.

A disk of thickness 3 mm was prepared by injection molding and then total transmittance/haze (T/H) was measured by a hazemeter (1001 DP manufactured by NIPPON DENSHOKU KOGYO CO. LTD). The T/H value was 87.5%/4.5%.

The pellets were cut by ultramicrotome to prepare a test piece of width 0.5 mm, length 0.5 mm and thickness 0.1 »m. The test piece was colored with RuO₄.

Further, a morphology of the polymer was observed with transmission electron microscopy (TEM) (JEM-2000FX manufactured by Japan Electric Co.).

The dispersed particles had 0.2 to 1.0 »m of diameter and a good state of dispersion was observed.

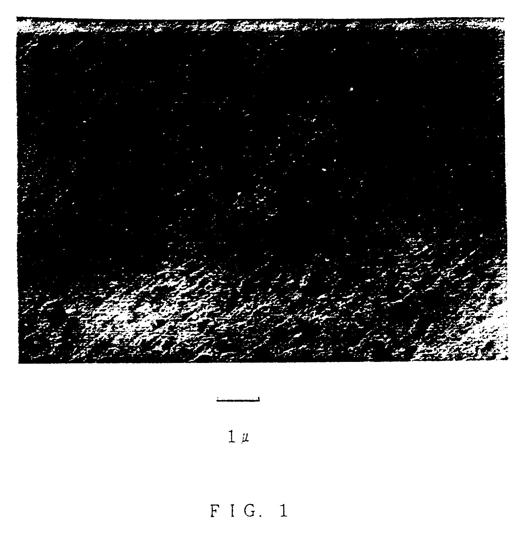

A transmission electron microscopy of an ultra thin film of the test piece (x 10,000) is shown in Fig. 1.

### Example 2

4.0 kg of sodium hydroxide was dissolved in 4.2 ℓ of water, and then 7.3 kg of 2,2-bis(4-hydroxyphenyl)propane (=BPA) and 8 g of hydrosulfite were dissolved therein, while keeping the solution at 20°C. Then, 28 ℓ of methylene chloride was added thereto, and 4.4 kg of phosgene was injected therein over 60 minutes.

After the injection of phosgene, 460 g of acrylic acid and 73 g of tetrabutylammonium bromide were added thereto, and the reaction solution was vigorously stirred to emulsify it. 20 minutes after the emulsification, 8 g of triethylamine was added thereto and stirring was continued for about one hour to conduct polymerization.

The resulting polymerization solution was separated into an aqueous phase and an organic phase, and the organic phase was neutralized with phosphoric acid and repeatedly washed with water until the pH of the washing water became neutral. Then, 35 ℓ of isopropanol was added thereto to precipitate polymers. The precipitates were recovered therefrom by filtration and vacuum dried, whereby white powdery polycarbonate resin was obtained.

As a result of determination of the viscosity of the polycarbonate resin, it was found that the viscometric average molecular weight was 16,000.

500 ℓ of the powder of the terminally unsaturated polycarbonate were placed in a stainless steel autoclave having a net volume of 5 ℓ, and 2,500 ml of deionized water was added thereto. Then, 2.5 g of benzoyl peroxide (temperature for a half-value period of 10 hours: 74°C) as a radical polymerization initiator and 150 g of methyl methacrylate were added thereto. The mixture was stirred for 2 hours to impregnate the terminally unsaturated polycarbonate resin with the radical polymerization initiator and methyl methacrylate, with stirring for 2 hours, while keeping the autoclave at 60°C. Then, the temperature was elevated to 80°C and stirring was continued for 4 hours. At that time, 75% of the radical polymerization initiator was decomposed and 68% of methyl methacrylate monomer was converted.

The polymer powder was recovered from the suspension, washed with hot water and made thoroughly free from the washing water. The resulting polymer powder had a water content of 8% by weight. The wet polymer was fed to a vent-type, biaxial extruder, 30 mm in shaft diameter with L/D = 32, and extruded at a resin temperature of 250°C to obtain pellets.

The pellets thus obtained were transparent and substantially did not contain styrene monomer.

A disk of thickness 3 mm was prepared by injection molding and then total transmittance/haze (T/H) was measured by a hazemeter (1001 DP manufactured by NIPPON DENSHOKU KOGYO CO. LTD). The T/H value was 87.7%/4.7%.

A test piece was prepared and colored in the same manner as in Example 1.

Further, a morphology of the polymer was observed with transmission electron microscopy (TEM) (JEM-2000FX manufactured by Japan Electric Co.).

The dispersion particles had 0.2 to 0.7 »m of diameter and a good state of dispersion was observed.

### Example 3

Polycarbonate resin having unsaturated terminal group was obtained in the same manner as in Example 1 except that 25 g of p-isopropenylphenol as a functional compound for introducing unsaturated terminal group and 225 g of p-t-butylphenol as a terminating agent were added.

As a result of measuring the viscosity of the polycarbonate resin, it was found that the viscometric average molecular weight (Mv) was 17,000.

500 g of powder of the terminally unsaturated polycarbonate resin were placed in a stainless steel autoclave having a net volume of 5 ℓ, and 2,500 ml of deionized water was added, thereto. Then, 10 g of t-butyl peroxy-2-ethylhexanoate (temperature for a half-value period of 10 hours: 72.5°C) as a radical polymerization initiator, 500 g of styrene monomer and 0.2 g of n-octylmercaptane as a molecular weight-controlling agent were added thereto. Then, the mixture was stirred for 2 hours, while keeping the temperature of the autoclave at 60° - 65°C to impregnate the powder of the terminally unsaturated polycarbonate with the radical polymerization initiator, styrene and n-octylmercaptane. Then, the temperature of the autoclave was elevated to 90°C and stirring was continued for 5 hours. At that time, more than 90% of styrene monomer was converted.

Polymer powder was recovered from the suspension, washed with hot water and then dried at 100°C for 10 hours with nitrogen. 960 g of the resulting polymer powder was obtained. The wet polymer powder was fed to the same vent-type, biaxial extruder as used in Example 1, and extruded at a resin temperature of 280°C to obtain pellets.

The pellets thus obtained were transparent and substantially did not contain styrene monomer. A disk of thickness 3 mm was prepared by injection molding in the same manner as in Example 1 and then total transmittance/haze (T/H) was measured by a hazemeter (1001 DP manufactured by NIPPON DENSHOKU KOGYO CO. LTD.). The T/H value was 88.0%/2.0%.

A test piece was prepared and colored in the same manner as in Example 1.

Further, a morphology of the polymer was observed with transmission electron microscopy (TEM) (JEM-2000FX manufactured by Japan Electric Co.).

The dispersed particles had 0.2 - 0.5 »m of diameter and a good state of dispersion was observed.

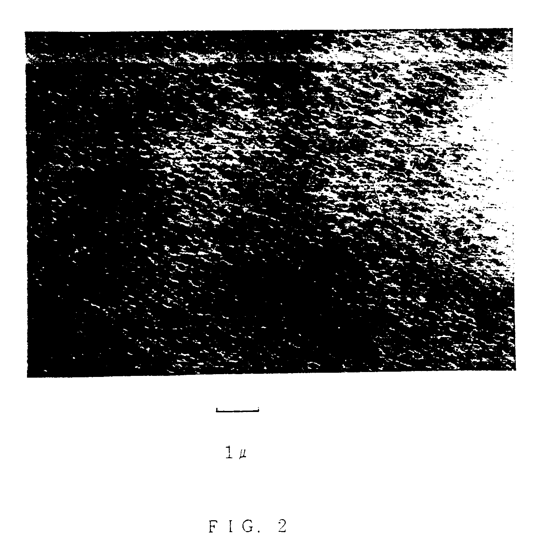

A transmission electron microscopy of an ultra thin film of the test piece (x 10,000) is shown in Fig. 2.

### Example 4

Polycarbonate resin having unsaturated terminal group was obtained in the same manner as in Example 1 except that 306 g of eugenol as a functional compound for introducing unsaturated terminal group was used.

As a result of measuring the viscosity of the polycarbonate resin, it was found that the viscometric average molecular weight (Mv) was 15,000.

500 g of powder of the terminally unsaturated polycarbonate resin were placed in a stainless steel autoclave having a net volume of 5 ℓ, and 2,500 ml of deionized water was added thereto. Then, 10 g of benzoyl peroxide (temperature for a half-value period of 10 hours: 74°C) as a radical polymerization initiator, 500 g of styrene monomer and 0.2 g of n-dodecylmercaptane as a molecular weight-controlling agent were added thereto. Then, the mixture was stirred for 2 hours, while keeping the temperature of the autoclave at 60° - 65°C to impregnate the powder of the terminally unsaturated polycarbonate with the radical polymerization initiator, styrene and n-dodecylmercaptane. Then, the temperature of the autoclave was elevated to 90°C and stirring was continued for 5 hours. At that time, more than 90% of styrene monomer was converted.

970 g of polymer powder was obtained in the same manner as in Example 3. The wet polymer powder was fed to the same vent-type, biaxial extruder as used in Example 1, and extruded at a resin temperature of 240°C to obtain pellets.

The pellets thus obtained were transparent and substantially did not contain styrene monomer. A disk of thickness 3 mm was prepared by injection molding in the same manner as in Example 1 and then total transmittance/haze (T/H) was measured by a hazemeter (1001 DP manufactured by NIPPON DENSHOKU KOGYO CO., LTD.). The T/H value was 88.0%/1.9%.

A test piece was prepared and colored in the same manner as in Example 1.

Further, a morphology of the polymer was observed with transmission electron microscopy (TEM) (JEM-2000FX manufactured by Japan Electric Co.).

The dispersed particles had 0.2 - 0.7 »m of diameter and a good state of dispersion was observed.

### Example 5

Polycarbonate resin having unsaturated terminal group was obtained in the same manner as in Example 1 except that 250 of o-allylphenol as a functional compound for introducing unsaturated terminal group was used.

As a result of measuring the viscosity of the polycarbonate resin, it was found that the viscometric average molecular weight (Mv) was 15,000.

500 g of powder of the terminally unsaturated polycarbonate resin were placed in a stainless steel autoclave having a net volume of 5 ℓ, and 2,500 ml of deionized water was added thereto. Then, 10 g of cumylperoxyoctoate (temperature for a half-value period of 10 hours: 65.1°C) as a radical polymerization initiator, 500 g of styrene monomer and 0.2 g of n-dodecylmercaptane as a molecular weight-controlling agent were added thereto. Then, the mixture was stirred for 2 hours, while keeping the temperature of the autoclave at 60° - 65°C to impregnate the powder of the terminally unsaturated polycarbonate with the radical polymerization initiator, styrene and n-dodecylmercaptane. Then, the temperature of the autoclave was elevated to 90°C and stirring was continued for 5 hours. At that time, more than 90% of styrene monomer was converted.

960 g of polymer powder was obtained in the same manner as in Example 3. The wet polymer powder was fed to the same vent-type, biaxial extruder as used in Example 1, and extruded at a resin temperature of 240°C to obtain pellets.

The pellets thus obtained were transparent and substantially did not contain styrene monomer. A disk of thickness 3 mm was prepared by injection molding in the same manner as in Example 1 and then total transmittance/haze (T/H) was measured by a hazemeter (1001 DP manufactured by NIPPON DENSHOKU KOGYO CO., LTD.). The T/H value was 87.8%/2.3%.

A test piece was prepared and colored in the same manner as in Example 1.

Further, a morphology of the polymer was observed with transmission electron microscopy (TEM) (JEM-2000FX manufactured by Japan Electric Co.).

The dispersed particles had 0.2 - 0.8 »m of diameter and a good state of dispersion was observed.

### Example 6

Polycarbonate resin having unsaturated terminal group was obtained in the same manner as in Example 1 except that 306 g of eugenol as a functional compound for introducing unsaturated terminal group was used.

As a result of measuring the viscosity of the polycarbonate resin, it was found that the viscometric average molecular weight (Mv) was 17,000.

500 g of powder of the terminally unsaturated polycarbonate resin were placed in a stainless steel autoclave having a net volume of 5 ℓ, and 2,500 ml of deionized water was added thereto. Then, 10 g of benzoyl peroxide (temperature for a half-value period of 10 hours: 74°C) as a radical polymerization initiator, 500 g of styrene monomer and 100 g of N-cyclohexylmaleimide and 0.2 g of n-dodecylmercaptane as a molecular weight-controlling agent were added thereto. Then, the mixture was stirred for 2 hours, while keeping the temperature of the autoclave at 60° - 65°C to impregnate the powder of the terminally unsaturated polycarbonate with the radical polymerization initiator, styrene, N-cyclohexylmaleimide and n-dodecylmercaptane. Then, the temperature of the autoclave was elevated to 90°C and stirring was continued for 5 hours. At that time, more than 90% of styrene monomer and N-cyclohexylmaleimide monomer was converted.

1046 g of polymer powder was obtained in the same manner as in Example 3. The wet polymer powder was fed to the same vent-type, biaxial extruder as used in Example 1, and extruded at a resin temperature of 240°C to obtain pellets.

The pellets thus obtained were transparent and substantially did not contain styrene monomer. A disk of thickness 3 mm was prepared by injection molding in the same manner as in Example 1 and then total transmittance/haze (T/H) was measured by a hazemeter (1001 DP manufactured by NIPPON DENSHOKU KOGYO CO., LTD.). The T/H value was 87.0%/2.0%.

A test piece was prepared and colored in the same manner as in Example 1.

Further, a morphology of the polymer was observed with transmission electron microscopy (TEM) (JEM-2000FX manufactured by Japan Electric Co.).

The dispersed particles had 0.2 - 0.8 »m of diameter and a good state of dispersion was observed.

### Comparative Example 1

1 kg of Polycarbonate resin, Iupilon H-4000 (produced by Mitsubishi Gas Chemical Co.) and 1 kg of Polystylene, Dialex (produced by Mitsubishi Monsant Kasei Co.) were mixed with tumbler in a dry state.

Then, the mixed polymer was fed to a vent-type biaxial extruder, 30 mm in shaft diameter with LD=32, and extruded at resin temperature of 250°c to obtain pellets.

Thus obtained resin pellets were injected into the mold to prepare a disk of 3 mm thickness. T/H of this disk was measured by haze meter (1001 DP, manufactured by NIPPON DENSHOKU LTD.) T/H was 87.3%/54.9%

A test piece was prepared and colored in the same manner as in Example 1. Morhology of polymer were observed by TEM (JEM-2000FX, manufactured by Japan Electric. Co.)

The dispersion was not uniform and dispersion particles were more than 10 »m.

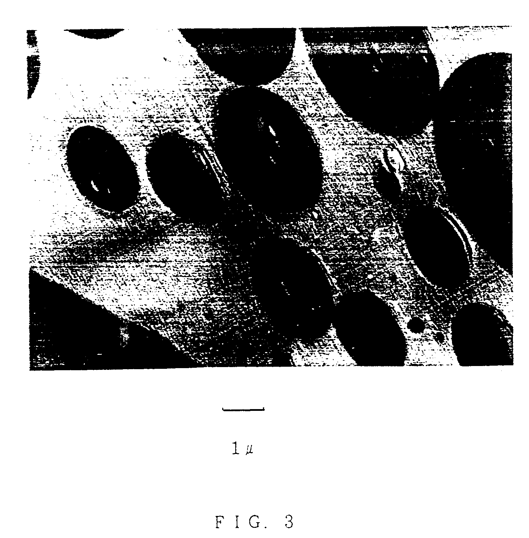

A transmission electron microscopy of an ultra thin film of the test piece (x 10,000) is shown in Fig. 3.

According to the present invention, it is not necessary to use vinyl monomer as a solvent, and an amount of the vinyl monomer depends on a grafting ratio. There is no need for recovering unreacted vinyl monomer. After the polymerization, the resulting polymer is only separated from water, and water is not recovered for reuse.

According to the present invention, many kinds of vinyl polymer grafted polycarbonate resin can be obtained with commercial advantages. These grafted polymers are useful not only for optical materials, but also for a compatible material of polymer alloys, an adhesive and a paint.

## Claims

1. A process for producing a grafted polycarbonate resin, which comprises
adding to an aqueous suspension of an aromatic polycarbonate resin in the shape of a powder or a pellet having particle sizes of 0.1 to 5 mm and
having radical-polymerizable unsaturated terminal group, 5 to 200 parts by weight of a vinyl monomer on the basis of 100 parts by weight of the polycarbonate resin and 0.01 to 5 parts by weight of a radical polymerization initiator on the basis of 100 parts by weight of the vinyl monomer,
heating the aqueous suspension under such a condition that no substantial decomposition of the radical polymerization initiator takes place, at a temperature lower by at least 5°C than the decomposition temperature for the half-value period of 10 hours of the radical polymerization initiator, thereby impregnating the polycarbonate resin with the vinyl monomer and the radical polymerization initiator,
then elevating the temperature at which decomposition of the radical polymerization initiator starts, thereby conducting graft-polymerization reaction between the polycarbonate and vinyl monomer.

2. A process according to claim 1, wherein the vinyl monomer is at least one member selected from vinyl aromatic monomers, methacrylic ester monomers, acrylic ester monomers, metacrylonitrile, vinyl ester monomers, maleimide, fumaric acid ester.

3. A process according to claim 1, wherein the polycarbonate resin having radical-polymerizable unsaturated terminal is a polycarbonate having isopropenylphenol, eugenol, o-allylphenol, 2-hydroxyethylmethacrylate on a terminal.

4. A process according to claim 1 wherein an aliphatic or aromatic sulfur containing compound containing 1 to 30 carbon atoms is used as a molecular weight controlling agent.

5. A process for producing a grafted polycarbonate resin according to claim 1, comprising the additional steps of: conducting solid-liquid separation of the obtained grafted polycarbonate and subsequently melt-kneading the separated solid polycarbonate at a temperature of 200 to 350°C.

## Patentansprüche

1. Verfahren zur Herstellung eines gepfropten Polycarbonatharzes, umfassend
die Zugabe zu einer wäßrigen Suspension eines aromatischen Polycarbonatharzes in Form eines Pulvers oder von Pellets mit einer Teilchengröße von 0,1 bis 5 mm und
mit einer radikal-polymerisierbaren ungesättigten Endgruppe von 5 bis 200 Gew.-Teilen eines Vinylmonomers auf Basis von 100 Gew.-Teilen des Polycarbonatharzes und 0,01 bis 5 Gew.-Teilen eines Radikalpolymerisationsinitiators auf Basis von 100 Gew.-Teilen des Vinylmonomers,
Erhitzen der wäßrigen Suspension unter solchen Bedingungen, daß keine wesentliche Zersetzung des Radikalpolymerisationsinitiators stattfindet,
auf eine Temperatur, die um wenigstens 5°C niedriger ist als die Zersetzungstemperatur für die Halbwertperiode von 10 Stundes des Radikalpolymerisatinsinitiators, wodurch das Polycarbonatharz mit dem Vinylmonomer und dem Radikalpolymerisationsinitiator imprägniert wird,
worauf man dann die Temperatur, bei welcher die Zersetzung des Radikalpolymerisationsinitiators beginnt, erhöht, und dadurch eine Pfropfpolymerisationsreaktion zwischen dem Polycarbonat und dem Vinylmonomer durchführt.

2. Verfahren gemäß Anspruch 1, bei dem das Vinylmonomer wenigstens eines ausgewählt aus vinylaromatischen Monomeren, Methacrylsäureestermonomeren, Acrylestermonomeren, Metacrylnitril, Vinylestermonomeren, Maleinsäureimid, Fumarsäureester ist.

3. Verfahren gemäß Anspruch 1, bei dem das Polycarbonatharz mit radikalpolymerisierbaren ungesättigten Endgruppen ein Polycarbonat ist, welches an einer Endgruppe Isopropenylphenol, Eugenol, o-Allylphenol, 2-Hydroxyethylmethacrylat hat.

4. Verfahren gemäß Anspruch 1, bei dem eine aliphatische oder aromatische Schwefel-enthaltende Verbindung, enthaltend 1 bis 30 Kohlenstoffatome, als Molekulargewichts-Einstellungsmittel verwendet wird.

5. Verfahren zur Herstellung eines gepfropften Polycarbonatharzes gemaß Anspruch 1, umfassend die zusätzlichen Stufen: Durchführen einer Fest-Flüssig-Trennung bei dem erhaltenen gepfropften Polycarbonat und anschließendes Schmelzverkneten des abgetrennten festen Polycarbonats bei einer Temperatur von 200 bis 350°C.

## Revendications

1. Procédé pour préparer une résine de polycarbonate greffé, qui comprend :
- l'addition à une suspension aqueuse d'une résine de polycarbonate aromatique sous forme d'une poudre ou d'une pastille ayant un diamètre des particules de 0,1 à 5 mm et ayant un groupe terminal insaturé polymérisable par radical, 5 à 200 parties en poids d'un monomère de vinyle par rapport à 100 parties en poids de la résine de polycarbonate et 0,01 à 5 parties en poids d'un agent d'amorçage radicalaire de polymérisation par rapport à 100 parties en poids du monomère de vinyle,
- le chauffage de la suspension aqueuse dans des conditions telles qu'aucune décomposition importante de l'agent d'amorçage radicalaire de polymérisation ne se produit à une température inférieure d'au moins 5°C à la température de décomposition pour la demi-période de 10 heures de l'agent d'amorçage radicalaire de polymérisation, d'où l'imprégnation de la résine de polycarbonate avec le monomère de vinyle et l'agent d'amorçage radicalaire de polymérisation,
- puis l'élévation de la température à laquelle commence la décomposition de l'agent d'amorçage radicalaire de polymérisation, d'où la conduite de la réaction de polymérisation par greffage entre le polycarbonate et le monomère de vinyle.

2. Procédé selon la revendication 1, dans lequel le monomère de vinyle est au moins un élément choisi parmi les monomères aromatiques de vinyle, les monomères d'esters méthacryliques, les monomères d'esters acryliques, le méthacrylonitrile, les monomères d'esters de vinyle, le maléimide, un ester de l'acide fumarique.

3. Procédé selon la revendication 1, dans lequel la résine de polycarbonate ayant une terminaison insaturée polymérisable par radical est un polycarbonate ayant un isopropénylphénol, eugénol, o-allylphénol, méthacrylate de 2-hydroxyéthyle sur une terminaison.

4. Procédé selon la revendication 1, dans lequel un composé aliphatique ou aromatique contenant du soufre, ayant 1 à 30 atomes de carbone, est utilisé comme agent de contrôle de la masse moléculaire.

5. Procédé pour produire une résine de polycarbonate greffé selon la revendication 1, comprenant les étapes supplémentaires consistant à : effectuer une séparation solide-liquide du polycarbonate greffé obtenu et ensuite malaxer à l'état de masse fondue le polycarbonate solide séparé à une température de 200 à 350°C.
